# FASCICULE DE BREVET EUROPEEN

(11) **EP 3 236 301 B1**
(45) Date de publication et mention de la délivrance du brevet: **11.03.2020**
(21) Numéro de dépôt: 17165420.5
(22) Date de dépôt: 07.04.2017
(51) Int. Cl.: G02B 6/38

(54) **CONNECTEUR ÉTANCHE ET DÉMONTABLE POUR FIBRES OPTIQUES**
DICHTER DEMONTIERBARER STECKER FÜR LICHTWELLENLEITER
SEALED, REMOVABLE CONNECTOR FOR OPTICAL FIBRES

(30) Priorité: 19.04.2016 FR 1653455
(43) Date de publication de la demande: 25.10.2017
(73) Titulaire: Zodiac Aerosafety Systems, 78370 Plaisir (FR)
(72) Inventeur: PELLETIER, Yannick, 37600 Loches (FR)
(74) Mandataire: Casalonga

(56) Documents cités:
- WO-A1-2005/081028
- KR-B1- 10-0 358 031
- US-A- 4 615 547
- US-A1- 2003 230 855
- US-A1- 2004 120 617

## Description

La présente invention concerne un connecteur pour fibres optiques, destiné à assurer la liaison fonctionnelle entre au moins deux extrémités respectives de deux fibres optiques, et plus particulièrement de deux faisceaux d'une multiplicité de fibres optiques.

Une fibre optique assure la transmission d'un signal lumineux, porteur d'information, d'un point à un autre. Lorsque la distance entre l'émission et la réception du signal lumineux dépasse une longueur donnée, ou encore lorsque les fibres passent d'un milieu à un autre, par exemple liquide/air, les milieux étant séparés par une cloison, il est nécessaire alors de prévoir des dispositifs assurant la continuité fonctionnelle des deux sections de fibres à raccorder, ces dispositifs étant appelés connecteurs.

Les connecteurs connus pour faisceaux de fibres optiques, comportent :
- un corps de forme générale cylindrique et creux, avantageusement pourvu d'un disque médian et de deux parties d'extrémité filetées ;
- un insert formé d'un bloc cylindrique, muni de trous traversants longitudinaux ;
- au moins un dispositif destiné à assurer la liaison optique d'une extrémité de fibre avec une autre extrémité de fibre, le dispositif comprenant :
   * une férule cylindrique, généralement en céramique, percée pour le passage de l'extrémité de la fibre, et
   * un porte-férule pour assurer la liaison mécanique entre la férule et l'insert, ainsi que le porte-férule et les éléments de la fibre optique.

On comprend que les connecteurs doivent assurer non seulement la liaison fonctionnelle entre les fibres, mais réaliser également une liaison étanche ou hermétique. L'étanchéité se mesure en taux de fuite, fonction des normes, des applications et des milieux situés de part et d'autre du connecteur. L'étanchéité se mesure en « indice de protection » (dénommé par le sigle IP). L'herméticité se mesure en taux de fuite, qui doit généralement être compris entre 1 x 10⁻⁵ et 1 x 10⁻⁹ atm.cm³/s.

L'étanchéité d'un tel connecteur doit être réalisée en quatre zones ou endroits, à savoir entre :
a) la cloison et le connecteur, de façon connue par un joint torique au niveau du disque médian du corps du connecteur ;
b) la fibre optique et l'extrémité de la férule, de manière connue à l'aide d'une colle du type époxy ;
c) le porte-férule et l'insert ;
d) l'insert et le corps du connecteur.

Les connecteurs connus assurent l'étanchéité aux niveaux ci-dessus a) et b) de manière satisfaisante au regard des normes actuelles.

Pour assurer l'étanchéité aux niveaux ci-dessus c), il est prévu, de façon connue, des moyens de scellement du type colle.

En variante, le brevet coréen KR 100358031B1 montre un connecteur dont le porte-férule est pourvu d'un joint torique, la partie aval de connexion étant noyée par collage, pour assurer l'étanchéité au niveau ci-dessus d).

Cependant, les connecteurs connus, s'ils assurent l'étanchéité de manière correcte et satisfaisante, ne sont pas démontables, et ne permettent donc pas l'accès à la férule ni aux porte-férules.

En cas de dysfonctionnement, par exemple d'une férule, d'un porte-férule ou d'une fibre optique, il est nécessaire de remplacer le connecteur en entier, avec les conséquences pécuniaires qui en résultent.
La présente invention remédie à cette situation et propose un connecteur apte à relier entre elles au moins deux extrémités de deux fibres optiques respectives, de manière à assurer d'une part une liaison fonctionnelle, et d'autre part l'étanchéité ou l'herméticité du connecteur et des fibres par rapport aux milieux respectifs situés de chaque côté du connecteur, tout en permettant de démonter ce dernier pour remplacement ou maintenance, et notamment du ou des porte-férules.
À cette fin, selon l'invention, le connecteur apte à relier au moins deux extrémités de deux fibres optiques, de manière fonctionnelle et étanche aux milieux extérieurs, du type comportant :
- un corps de forme générale cylindrique et dont la partie intérieure, formant un insert, est pourvue de conduits traversant longitudinaux ;
- au moins un dispositif de liaison optique comprenant :
   * une férule cylindrique, généralement en céramique, percée pour le passage du cœur de la fibre, et
   * un porte-férule d'une part destiné à être lié à l'extrémité de la fibre associée, et d'autre part destiné à assurer la liaison mécanique entre la férule et l'insert ;
- un joint torique étant prévu entre le porte-férule et le conduit traversant correspondant de l'insert ;
est caractérisé en ce que le corps du connecteur et l'insert forment un ensemble monobloc, soit réalisé d'une seule pièce et en ce qu'il est prévu sur le ou chaque porte-férule, deux joints toriques successifs, disposés à distance l'un de l'autre longitudinalement.

Ainsi, il n'y a pas de fuite entre l'insert et le corps, et il n'est pas nécessaire de prévoir un scellement par colle, entre les différentes pièces du connecteur, ce qui permet d'accéder aux porte-férules. Le connecteur de l'invention est ainsi hermétique.

Avantageusement, l'insert et le corps sont fixés l'un à l'autre par soudage ou collage, sur toute leur surface respective de contact.
L'insert et le corps sont réalisés en un même matériau, tel que par exemple en acier inoxydable, ou en aluminium, titane ou composite et de préférence en acier inoxydable. Ils peuvent être en variante, réalisés en deux matériaux compatibles, de manière à permettre la fixation de l'un à l'autre par soudage, collage ou similaire.

Ainsi, le porte-férule doté des joints coopère avec l'insert de manière étanche. Le porte-férule coopère avec l'insert sans collage au contraire de l'art antérieur. Le porte-férule est donc avantageusement amovible et dissociable de l'insert.
Un des joints est réalisé en un matériau compatible avec ou adapté au premier milieu situé d'un côté du connecteur, tandis que le second joint est réalisé en un matériau compatible avec ou adapté au second milieu situé de l'autre côté du connecteur.
Ainsi, chaque joint est en un matériau adapté à assurer de manière optimale l'étanchéité au regard du milieu avec lequel il est en contact.

Le premier joint torique est notamment réalisé en fluorosilicone, tandis que le second joint torique est réalisé en fluorocarbone. Les deux joints peuvent aussi, en variante, être constitués d'un même matériau.

La distance entre les deux joints toriques est comprise entre 2,5 mm et 3,5 mm, et de préférence de l'ordre de 3 mm.

L'invention sera bien comprise à la lumière de la description qui suit d'exemples illustratifs mais non limitatifs, se référant au dessin annexé dans lequel :
La figure 1 est une vue en perspective frontale d'un connecteur et d'un faisceau de fibres ;
La figure 2 est une vue en coupe schématique d'une fibre optique, d'une férule et d'un porte-férule associé ;
La figure 3 est une vue en perspective et en coupe partielle selon un plan diamétral, du connecteur de l'invention associé à des fibres ;
La figure 4 est une vue en perspective du connecteur de la figure 3, les fibres étant ôtées ;
La figure 5 est une vue en perspective de l'insert du connecteur de la figure 4 et un porte-férule ;
La figure 6A est une vue en coupe diamétrale selon un plan vertical du connecteur de la figure 4 ;
La figure 6B représente le corps seul du connecteur de la figure 6A, sans l'insert ni le porte-férule ;
La figure 7 est une vue en perspective d'une plaque de guidage et de blocage des porte-férules ;
La figure 8 est une vue en coupe diamétrale longitudinale d'un porte-férule, d'une extrémité de fibres et la férule associée.

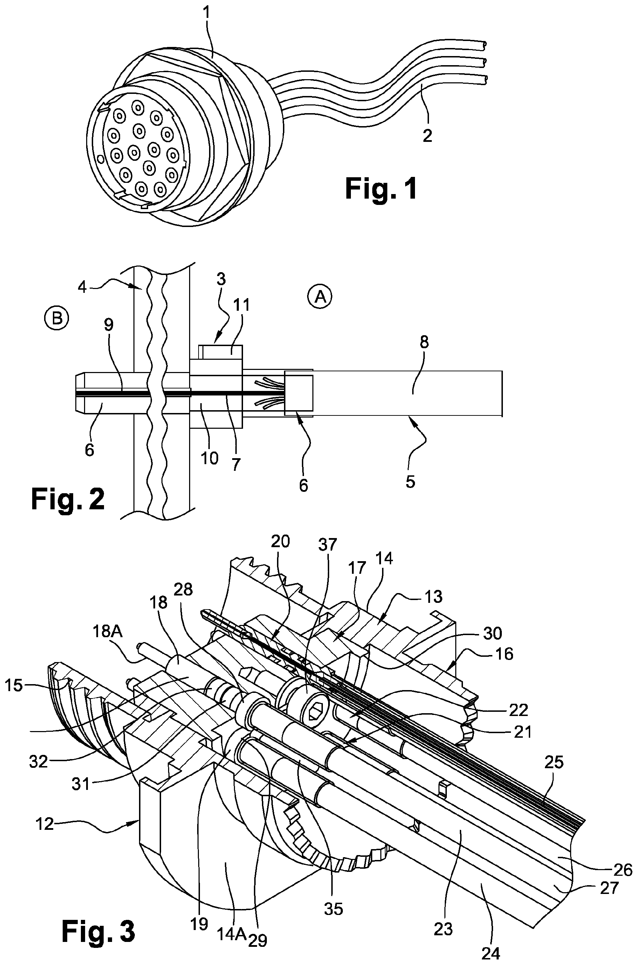

Sur la figure 1, on a représenté en perspective frontale, un connecteur 1 de l'invention, lié à un faisceau 2 de fibres optiques, à l'arrière, tandis que la face frontale du connecteur 1 présente une paroi d'où dépassent des éléments mâles (appelés férules et explicités ci-après) et destinés à assurer, avec un autre jeu de férules disposées sur un autre connecteur associé (non représenté), la liaison optique fonctionnelle des extrémités respectives des fibres.

De façon connue, les férules respectives de chaque connecteur sont mises en regard et en contact pour assurer la liaison optique et fonctionnelle des extrémités des fibres associées.

La représentation de la figure 2 est schématique et correspond à l'art antérieur.

La figure 2 montre en coupe très schématique un porte-férule 3 traversant une cloison interne 4 d'un connecteur. La cloison 4 sépare un premier milieu A, tel qu'un liquide, d'un second milieu B, tel que de l'air. La cloison interne 4 est représentée d'une épaisseur moindre, pour des raisons de clarté, qu'elle n'est en réalité (dans le plan de la figure).

Le porte-férule 3 relie l'extrémité d'une fibre optique 5 et une férule 6. La fibre optique 5 comporte un cœur 7, centré.

L'extrémité de la fibre 5 comporte un manchon 8 (dénommé "jacket" en anglais) d'où dépasse le cœur 7 qui débouche en aval dans la férule 6 cylindrique, généralement faite en céramique. Le porte-férule 3 comprend un corps cylindrique traversé par le cœur 7 de fibre qui est logé dans un conduit interne 9.

L'extrémité de la fibre 5 est noyée dans de la colle 10, cette dernière noyant également le conduit 9 et emprisonnant le cœur 7 de fibre jusqu'à la férule 6.

Le porte-férule 3 comporte une collerette annulaire 11 de plus grand diamètre, et qui est apte à porter en butée contre une des faces de la cloison interne 4 du connecteur.

On comprend que la férule 6, ainsi que les autres férules du même connecteur (qui ne sont pas représentées), forment un ensemble d'éléments mâles, parallèles, et destinés (par leur extrémité aval) à venir en contact et en butée contre un autre ensemble d'éléments mâles, formés de férules identiques, d'un autre connecteur (non représenté).

Sur les figures 3 et suivantes, on a représenté le connecteur de l'invention, ainsi que ses éléments constitutifs, qui sont décrits ci-après.

Le connecteur 12 de l'invention est représenté sur la figure 3, en perspective et en vue éclatée en coupe diamétrale, étant associé à des fibres optiques.

Le connecteur 12 comporte ainsi un corps 13, de forme générale cylindrique et incluant :
- une bague centrale 14,
- un disque médian 14A de plus grand diamètre de la bague centrale,
- un manchon cylindrique avant fileté 15 ;
- un manchon cylindrique arrière 16.

Le corps 13 est creux, selon la réalisation illustrée.

Dans l'espace central creux du corps 13 est disposé un insert 17 cylindrique de diamètre extérieur correspondant au diamètre intérieur de la bague centrale 14. L'insert 17 est disposé dans l'intérieur du corps creux de manière serrée.

L'insert 17 est traversé par des trous ou conduits longitudinaux, parallèles à l'axe longitudinal du connecteur, au nombre d'environ dix, à titre d'exemple.

Les conduits internes de l'insert 17 sont aptes à recevoir et être traversés par des porte-férules cylindriques dont certains seulement sont visibles (du fait de la vue éclatée) et référencés 18, 19 (vu en partie), 20 (vu en coupe), et 21 et 22 (vus en partie).

Chaque porte-férule est, en arrière, associé et lié à une fibre optique respectivement 23, 24, 25, 26 et 27, de la manière décrite en rapport avec la figure 2.

Du côté opposé aux fibres (donc vers la partie frontale), chaque porte-férule est associé à une férule (18A pour le porte-férule 18) qui dépasse de la face avant de l'insert 17.

De manière connue, chaque porte-férule comporte une collerette, de plus grand diamètre, telles que celles visibles et référencées respectivement 28, 29 et 30. Les collerettes butent contre la face arrière, du côté des fibres optiques, de l'insert 17.

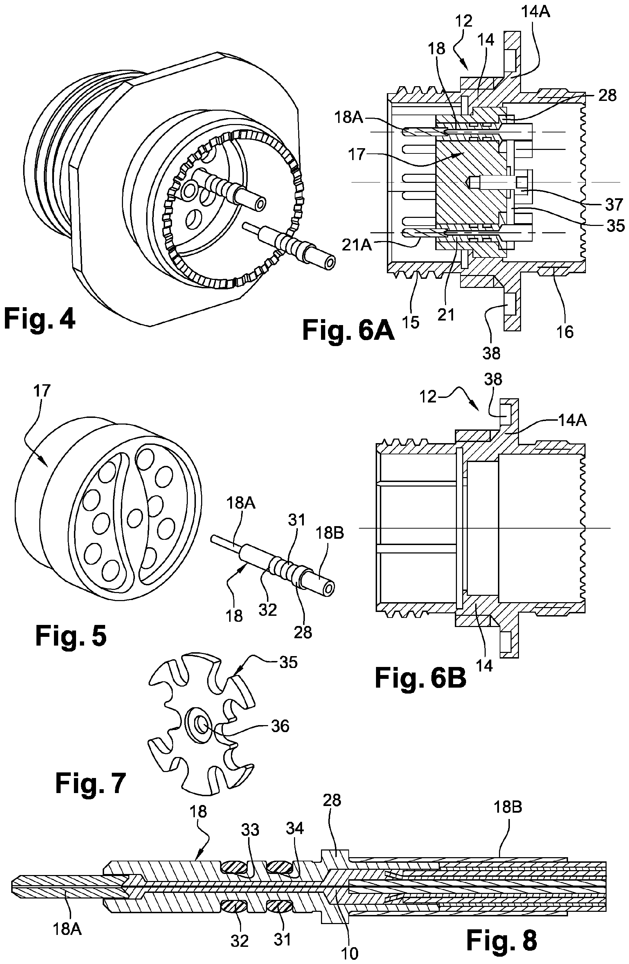

Selon l'invention, en référence aux figures 3 et 8, chaque porte-férule comporte deux joints toriques successifs, espacés longitudinalement l'un de l'autre et référencés, pour le porte-férule 18, respectivement premier joint 31 et second joint 32.

Les premier et second joints 31 et 32 sont logés dans des gorges complémentaires 33 et 34 du corps du porte-férule (figure 8), et débordent diamétralement du porte-férule. Ainsi, lors de la mise en place du porte-férule dans le conduit récepteur correspondant de l'insert 17, les joints sont comprimés dans le conduit, de manière à assurer l'étanchéité requise.

Le premier joint 31 est réalisé en un matériau correspondant au premier milieu situé du côté arrière du connecteur (du côté des fibres), tandis que le second joint 32 est réalisé en un matériau correspondant au second milieu situé du côté avant du connecteur.

Les milieux respectifs peuvent être liquide (eau, carburant, etc.) ou gazeux (air, oxygène, azote, etc.), selon les applications et domaines d'utilisation des connecteurs de l'invention.

Ainsi, chaque joint torique respectif (premier et second joints) est en un matériau adapté à assurer de manière optimale l'étanchéité au regard du milieu avec lequel il est en contact.

A titre d'exemple, le premier joint torique est réalisé en fluorosilicone, tandis que le second joint torique est réalisé en fluorocarbone.
La distance entre les premier et second joints toriques (d'un même porte-férule) est comprise entre 2,5 mm et 3,5 mm, et de préférence de l'ordre de 3 mm.
Il est fait référence aux figures 3 et 7. Une fois introduits dans leur conduit récepteur de l'insert 17, les porte-férules sont maintenus sur l'insert par une plaque 35 de forme générale circulaire étoilée, comprenant un trou central 36 destiné au passage d'une vis 37 (figure 3) destinée à être vissée sur l'insert.
La plaque 35 de maintien et fixation des porte-férules comprend des échancrures à fond arrondi sur son pourtour, destinée chacune à recevoir la partie de porte-férule située juste en arrière de la collerette. Pour le porte-férule 18, par exemple, cette partie est référencée 18B (figures 5 et 8). Ainsi, la plaque 35 porte contre chaque collerette et maintient les parties arrières des porte-férules plaquées contre la face arrière de l'insert 17 (figures 3 et 6A).
La figure 4 montre une vue en perspective du connecteur de la figure 3, et deux porte-férules (représentés sans la fibre associée) destinés à être insérés dans l'insert.
De même, l'insert 17 est représenté seul, en perspective sur la figure 5 avec un porte-férule destiné à être inséré (montré sans la fibre).

De manière connue, comme montré sur les figures 6A et 6B, le corps du connecteur comporte extérieurement une rainure circulaire 38 sur le disque médian 14A, ouverte du côté opposé aux fibres, et destinée à accueillir un joint torique (non représenté), assurant l'étanchéité entre le connecteur et un panneau ou une paroi (non représenté(e)) par exemple d'un réservoir, sur lequel ou laquelle le connecteur est fixé, la partie frontale filetée 15 du connecteur traversant un trou prévu sur ledit panneau ou ladite paroi.
Sur l'ensemble des figures, le corps du connecteur (montré en coupe sur la figure 6B, par exemple) est représenté creux et distinct de l'insert 17 (figures 3, 5 et 6A), ce qui ne correspond qu'à une forme de réalisation de l'invention.
Selon l'invention, le corps du connecteur et l'insert sont fixés et reliés l'un à l'autre de manière étanche et hermétique, par soudage ou collage ou similaire.
Le corps et l'insert sont de préférence en un métal apte au soudage, tel que l'acier inoxydable.

Selon l'invention (non représentée), le corps du connecteur et l'insert sont réalisés en une seule pièce, constituant alors un ensemble monobloc.

Ainsi, l'invention procure un connecteur, selon l'une ou l'autre des deux formes de réalisation, qui assure :
- une étanchéité totale (herméticité) entre le corps et l'insert ; et
- une étanchéité adéquate, répondant aux normes, grâce aux deux joints toriques sur chaque porte-férule, entre ces derniers et l'insert.

Outre les propriétés d'étanchéité, le connecteur de l'invention est hermétique, à savoir imperméable, car ne laissant passer entre le corps et l'insert aucun fluide, tel que liquide ou gaz, aucune particule, telle que la poussière, ni aucune odeur.

L'herméticité se mesure en taux de fuite des millièmes situées de part et d'autre du connecteur, notamment du corps et de l'insert.

Ainsi, l'herméticité du connecteur de l'invention est comprise entre 10⁻⁵ atm.cm³ .s⁻¹ et 10⁻⁹ atm.cm³.s⁻¹, notamment entre 10⁻⁶ atm.cm³ .s⁻¹ et 10⁻⁹ atm.cm³ .s⁻¹.

Le démontage du connecteur est aisé, puisqu'il suffit de dévisser la vis 37 (figures 3 et 6A), pour dégager la plaque de maintien 35, afin d'avoir accès à chaque porte-férule.

## Revendications

1. Connecteur (12) apte à relier au moins par une extrémité le cœur d'une fibre optique (23, 24, 25, 26, 27) au cœur d'une autre fibre optique, de manière fonctionnelle et étanche aux milieux extérieurs, du type comportant :
- un corps (13) de forme générale cylindrique, dont la partie intérieure formant un insert (17) cylindrique, est munie de conduits traversant longitudinaux ;
- au moins un dispositif de liaison optique comprenant :
* une férule (18A) cylindrique, généralement en céramique, percée pour le passage du cœur de la fibre, et
* un porte-férule (18, 19, 20, 21, 22) d'une part destiné à être lié à l'extrémité de la fibre associée, et d'autre part destiné à assurer la liaison mécanique entre la férule et l'insert ;
- un joint torique (31, 32) étant prévu entre le porte-férule et le conduit récepteur correspondant de l'insert ;
**caractérisé en ce que** le corps du connecteur et l'insert forment un ensemble monobloc réalisé d'une seule pièce et **en ce qu'**il est prévu sur le ou chaque porte-férule, deux joints toriques (31, 32) successifs, disposés à distance l'un de l'autre longitudinalement.

2. Connecteur selon la revendication 1, **caractérisé en ce que** l'insert et le corps sont en acier inoxydable.

3. Connecteur selon la revendication 1 ou 2, **caractérisé en ce qu'**un des joints est réalisé en un matériau correspondant au premier milieu situé d'un côté du connecteur, tandis que le second joint est réalisé en un matériau correspondant au second milieu situé de l'autre côté du connecteur.

4. Connecteur selon l'une quelconque des revendications précédentes, **caractérisé en ce que** le premier joint torique est réalisé en fluorosilicone, tandis que le second joint torique est réalisé en fluorocarbone.

5. Connecteur selon l'une quelconque des revendications précédentes, **caractérisé en ce que** la distance entre les deux joints toriques est comprise entre 2,5 mm et 3,5 mm, et de préférence de l'ordre de 3mm.

6. Connecteur selon l'une des revendications précédentes, dans lequel le connecteur de l'invention est hermétique.

7. Connecteur selon la revendication 6, dans lequel l'herméticité du connecteur est comprise entre 10⁻⁵ atm.cm³ ·s⁻¹, et 10⁻⁹ atm.cm³ ·s⁻¹, de préférence entre 10⁻⁶ atm.cm³ ·s⁻¹ et 10⁻⁹ atm.cm³ ·s⁻¹.

## Patentansprüche

1. Verbinder (12), der durch mindestens ein Ende den Kern einer Lichtleitfaser (23, 24, 25, 26, 27) mit dem Kern einer anderen Lichtleitfaser funktional und dicht gegenüber den Außenumgebungen verbinden kann, von der Art, die aufweist:
- einen Körper (13) von allgemein zylindrischer Form, dessen Innenbereich, der einen zylindrischen Einsatz (17) bildet, mit durchquerenden Längskanälen versehen ist;
- mindestens eine optische Verbindungsvorrichtung, die enthält:
* eine zylindrische Hülse (18A), allgemein aus Keramik, die für den Durchgang des Kerns der Faser durchbohrt ist, und
* einen Hülsenträger (18, 19, 20, 21, 22), der einerseits dazu bestimmt ist, mit dem Ende der zugeordneten Faser verbunden zu werden, und andererseits dazu bestimmt ist, die mechanische Verbindung zwischen der Hülse und dem Einsatz zu gewährleisten;
- einen Dichtring (31, 32), der zwischen dem Hülsenträger und dem entsprechenden Empfangskanal des Einsatzes vorgesehen ist;
**dadurch gekennzeichnet, dass** der Körper des Verbinders und der Einsatz eine einstückige Einheit bilden, die aus einem Stück hergestellt ist, und dass auf dem oder jedem Hülsenträger zwei aufeinanderfolgende Dichtringe (31, 32) vorgesehen sind, die in Längsrichtung in Abstand zueinander angeordnet sind.

2. Verbinder nach Anspruch 1, **dadurch gekennzeichnet, dass** der Einsatz und der Körper aus rostfreiem Stahl sind.

3. Verbinder nach Anspruch 1 oder 2, **dadurch gekennzeichnet, dass** eine der Dichtungen aus einem Material entsprechend der ersten Umgebung hergestellt ist, die sich auf einer Seite des Verbinders befindet, während die zweite Dichtung aus einem Material entsprechend der zweiten Umgebung hergestellt ist, die sich auf der anderen Seite des Verbinders befindet.

4. Verbinder nach einem der vorhergehenden Ansprüche, **dadurch gekennzeichnet, dass** der erste Dichtring aus Fluorsilikon hergestellt ist, während der zweite Dichtring aus Fluorkohlenstoff hergestellt ist.

5. Verbinder nach einem der vorhergehenden Ansprüche, **dadurch gekennzeichnet, dass** der Abstand zwischen den zwei Dichtringen zwischen 2,5 mm und 3,5 mm und vorzugsweise in der Größenordnung von 3 mm liegt.

6. Verbinder nach einem der vorhergehenden Ansprüche, wobei der erfindungsgemäße Verbinder hermetisch dicht ist.

7. Verbinder nach Anspruch 6, wobei die hermetische Dichtheit des Verbinders zwischen 10⁻⁵ atm.cm³·s⁻¹ und 10⁻⁹ atm.cm³·s⁻¹, vorzugsweise zwischen 10⁻⁶ atm.cm³·s⁻¹ und 10⁻⁹ atm.cm³·s⁻¹ liegt.

## Claims

1. Connector (12) able to join together at least by one end the core of one optical fibre (23, 24, 25, 26, 27) to the core of another optical fibre in a manner that is functional and tight against the external media, of the type comprising:
- a body (13) of generally cylindrical shape, whose inner portion forming a cylindrical insert (17) is provided with longitudinal through-conduits;
- at least one optical linkage device comprising:
* a cylindrical ferrule (18a), generally made of ceramic, pierced for the passage of the core of the fibre, and
* a ferrule holder (18, 19, 20, 21, 22) on the one hand designed to be joined to the end of the associated fibre and on the other hand designed to provide the mechanical linkage between the ferrule and the insert;
- an O-ring (31, 32) being provided between the ferrule holder and the corresponding receiving conduit of the insert;
**characterized in that** the body of the connector and the insert form a monobloc assembly realized as a single piece and **in that** two consecutive O-rings (31, 32) are provided on the ferrule holder or on each ferrule holder, said O-rings being arranged spaced apart from one another longitudinally.

2. Connector according to Claim 1, **characterized in that** the insert and the body are made of stainless steel.

3. Connector according to Claim 1 or 2, **characterized in that** one of the rings is made of a material corresponding to the first medium located on one side of the connector, while the second ring is made of a material corresponding to the second medium located on the other side of the connector.

4. Connector according to any one of the preceding claims, **characterized in that** the first O-ring is made of fluorosilicone, while the second O-ring is made of fluorocarbon.

5. Connector according to any one of the preceding claims, **characterized in that** the distance between the two O-rings is between 2.5 mm and 3.5 mm, and preferably of the order of 3 mm.

6. Connector according to one of the preceding claims, wherein the connector of the invention is airtight.

7. Connector according to Claim 6, wherein the airtightness of the connector is between 10⁻⁵ atm.cm³·s⁻¹ and 10⁻⁹ atm.cm³·s⁻¹, preferably between 10⁻⁶ atm.cm³·s⁻¹ and 10⁻⁹ atm.cm³·s⁻¹.
